(19) Europäisches Patentamt

European Patent Office

Office européen des brevets

(11) EP 0 999 664 A1

(12) **EUROPEAN PATENT APPLICATION**

(43) Date of publication:
10.05.2000 Bulletin 2000/19

(51) Int. Cl.⁷: $H04H\ 1/00$, $H04N\ 5/00$

(21) Application number: 98402766.4

(22) Date of filing: 06.11.1998

(84) Designated Contracting States:
**AT BE CH CY DE DK ES FI FR GB GR IE IT LI LU MC NL PT SE**
Designated Extension States:
**AL LT LV MK RO SI**

(71) Applicant: **THOMSON multimedia**
**92648 Boulogne Cédex (FR)**

(72) Inventors:
• **Deniau, Eric,**
**Thomson Multimedia Licensing & IP**
**92648 Boulogne Cedex (FR)**

• **Gentil, Luc,**
**Thomson Multimedia Licensing & IP**
**92648 Boulogne Cedex (FR)**
• **Fraleu, Sébastian,**
**Thomson Multimedia L.I.P**
**92648 Boulogne Cedex (FR)**

(74) Representative:
**Zhang, Jianguo et al**
**THOMSON multimedia,**
**46 quai A. Le Gallo**
**92648 Boulogne Cédex (FR)**

(54) **Method for determining a predetermined frequency associated with a transport stream in a digital broadcast receiver**

(57)    A method for determining a predetermined frequency associated with a transport stream in a digital broadcast receiver, comprises scanning (20, 21 ; 26, 27, 28 ; 30, 31) a frequency range, finding (22) a first frequency (FST) at which a first transport stream is received, reading (23) first identifying data (ID) from the first transport stream, which allows to uniquely identify the first transport stream, extracting (24) a first predetermined frequency (F') associated with the first identifying data from a database (25) by using the first identifying data, the database associating a predetermined frequency with predetermined identification data. The method may be used in networks where the actual broadcasting frequency of the transport stream is different from the predetermined frequency of this transport stream, as contained in a network information table.

FIG. 6

**Description**

The invention relates to digital broadcast receivers. More precisely the invention relates to a method for determining a predetermined frequency associated with a transport stream. The invention also relates to a method for selecting a service among a plurality of services available from at least a first transport stream. The invention also relates to a method for finding a new frequency of a new transport stream.

A digital broadcast receiver is a device which allows to use digital data broadcasted over for example a cable network, a satellite or a terrestrial emitter. The digital broadcast receiver may be known under the name "set top box" or "integrated receiver decoder". The digital data is typically broadcasted in one or a plurality of Transport Streams (TSs) each TS being broadcasted at a different frequency. The digital broadcast receiver may be designed to receive either one of a plurality of TSs by tuning at the frequency corresponding to the desired TS.

The transport stream typically comprises a plurality of services, i.e. audio and/or video programs, interactive application software ... and accompanying service information. The service information may for example describe a predetermined frequency at which the TS is broadcasted. It may also describe at which other predetermined frequencies other TSs are broadcasted especially if the digital broadcast receiver is designed to also receive at these other predetermined frequencies. The service information may also describe which services are available in the TS but also which other services are available in other TSs at the other predetermined frequencies. Therefore it is possible to use the service information to compile for the TS or for a plurality of TSs taken from the other TSs a list of available services and associate each service with the predetermined frequency of the TS in which the service is available when a service is selected the digital broadcast receiver is tuned to the appropriate associated predetermined frequency.

The service information may further comprise an information indicating a version of at least a part of the service information broadcasted. This way the digital broadcast receiver may update an existing list of available services if the broadcasted version information is more actual than a version information of the services in the existing list. A new version information may also indicate that a TS is no more broadcasted or that a new TS is broadcasted at a new predetermined frequency. The digital broadcast receiver may update the list of available services accordingly.

A problem arises when the service information is not fully coherent with a reality of available services in a plurality of TS, e.g. if a TS is not broadcasted at the associated predetermined frequency indicated in the service information but at a frequency different from the predetermined frequency. In this case each TS may be broadcasted and identified using the service information. However it is not possible to maintain an updated list of services available on a plurality of TSs or to tune to the new frequency of a new TS by using the service information a manner described in previous paragraphs because the predetermined frequencies have no predetermined relationship to the frequencies at which the TSs are broadcasted. A solution to update the list of available services and hence of existing and/or new TSs is to scan the frequency and monitor for TSs. Each time a TS is found the list of available services is updated with services found on that TS and an actual frequency of that TS is directly or indirectly associated to the services found. This way of updating may require to develop a system different from that relying on the service information for updating the list of available services and it requires a relatively long time to scan the frequency for each update. The fact that an actual frequency needs to be used instead of the broadcasted frequency to located and tune to a service and its TS also requires a system different from that which relies an the broadcasted service information.

In a first aspect, the invention suggests to overcome the above described problem using a method for determining a predetermined frequency associated with a transport stream in a digital broadcast receiver which comprises :

- scanning a frequency range,
- finding a first frequency at which a first transport stream is received,
- reading first identifying data from the first transport stream, which allows to uniquely identify the first transport stream, and
- extracting a first predetermined frequency associated with the first identifying data from a data base by using the first identifying data, the data base associating a predetermined frequency with predetermined identification data.

A first preferred embodiment of the invention comprises :

- retrieving a service description table containing a list of available services, from the first transport stream,
- establishing an actual list of services,
- storing the actual list of services.

A second preferred embodiment of the invention comprises :

- retrieving a network information table which comprises at least the database, from the first transport stream,
- storing the network information table.

A third preferred embodiment of the invention comprises :

• storing the first frequency for the first transport stream.

A fourth preferred embodiment of the invention comprises :

• computing a first frequency shift by subtracting the first predetermined frequency from the first frequency
• storing the first frequency shift for the first transport stream.

In a second aspect the invention suggests to overcome the above described problem using a method for selecting a service with a digital broadcast receiver, the service being one of a plurality of services available from at least a first transport stream received at a first frequency which comprises :

• selecting the service,
• identifying the first transport stream in which the service is available,
• extracting a first predetermined frequency associated with the first transport stream from a database, the database associating a predetermined frequency to a predetermined transport stream,
• computing the first frequency from the first predetermined frequency,
• tuning the digital broadcast receiver to the first frequency to receive the first transport stream, and
• reading the service from the first transport stream.

A fifth preferred embodiment of the invention comprises :

• looking up a conversion table for the first predetermined frequency, the conversion table comprising for a predetermined frequency an associated frequency, and
• extracting from the conversion table the first frequency.

A sixth preferred embodiment the invention comprises :

• looking up a frequency shift table for the first predetermined frequency, the frequency shift table comprising for a determined frequency an associated frequency shift, and
• extracting from the frequency shift table a first frequency shift which is a difference value between the first predetermined frequency and the first frequency.

In a third aspect the invention suggests to overcome the above described problem using a method for finding a new frequency of a new transport stream using a digital broadcast receiver, comprising :

• receiving a first transport stream at the first frequency,
• registering an update event,
• extracting new information from the first transport stream, the new information associating predetermined frequencies with predetermined transport streams,
• comparing the new information with a data base associating predetermined frequencies with predetermined transport streams,
• determining in the new information a new predetermined frequency associated to the new transport streams which is different from the predetermined frequencies in the database, and
• initiating an update tuning to find the new frequency at which the new transport stream may be received.

A seventh embodiment of the invention comprises :

• scanning a frequency range,
• finding a used frequency at which a transport stream is received,
• reading identifying data from the transport stream, which allows to uniquely identify the transport stream,
• setting a value of the new frequency to a value of the frequency if the identifying data identifies the transport stream as the new transport stream.

An eighth embodiment of the invention comprises :

• updating the database using the new information.

The invention will now be described using examples and making reference to figures 1 to 14 in which :

- Figure 1 contains a schematic blockdiagram of a connected digital broadcast receiver,
- Figure 2 shows a digital broadcast receiver initialization flowchart,
- Figure 3 shows a service list update flowchart,
- Figure 4 shows another digital broadcast receiver initialization flowchart,
- Figure 5 contains a network topology construction diagram,
- Figure 6 shows a flowchart for determining a predetermined frequency associated with a TS,
- Figure 7 shows a scanning flowchart,
- Figure 8 shows a monitoring flowchart,
- Figure 9 shows a flowchart for determining a predetermined frequency associated with a TS,
- Figure 10 contains a network topology construction diagram,
- Figure 11 shows a tuning flowchart,
- Figure 12 contains an illustration of a tuning mechanism,
- Figure 13 shows a flowchart for updating on a new frequency of a new TS,
- Figure 14 shows a flowchart for determining a new frequency value of a new TS.

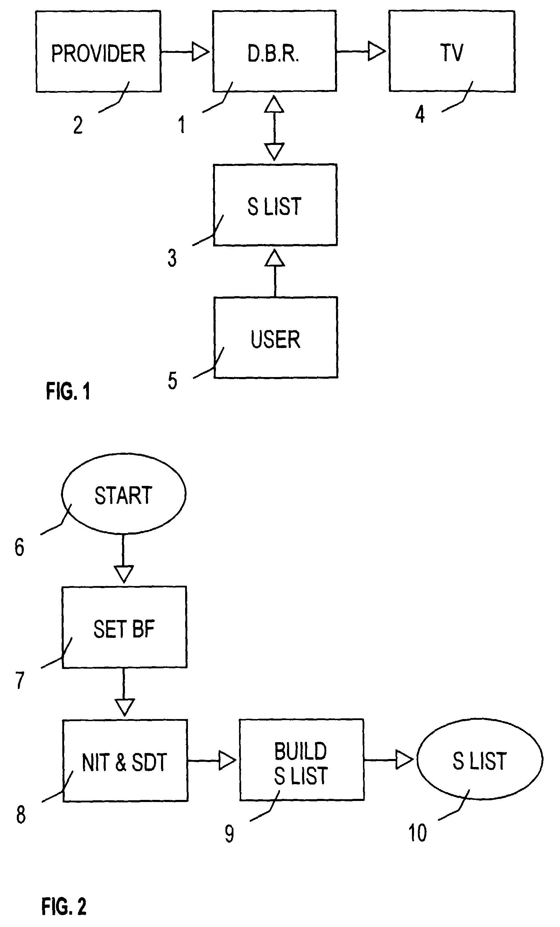

Referring to Figure 1 a digital broadcast receiver 1 receives data from a provider 2, which comprises at least a service. The digital broadcast receiver 1 compiles a global list of services 3 available from the provider 2. The global list of services 3 may for example be displayed on a screen of a TV 4 using a user interface (not shown), or on any other data presentation device like a remote control display or a dedicated display (not shown) connected to the digital broadcast receiver 1. A user 5 may select a service from the global list of services 3 using for example the user interface by means of a pointer on the display. The user 5 thereby instructs the digital broadcast receiver 1 to appropriately tune and run the selected service, and output any audio and/or visual information to the TV 4 or any other appropriate device connected, e.g. an audio hi-fi device or a home appliance device.

The provider 2 may provide data in a Transport Streams (TS), a TS being broadcasted at a predetermined frequency. Besides one or a plurality of services the TS may provide Service Information (SI) which for example indicates a unique identification of the TS, predetermined frequencies and identifications of TSs available to the digital broadcast receiver 1 and a description of services available in one or a plurality of available TSs.

A number of existing digital television standards implement the described TS and SI features. One example is the Digital Video Broadcast (DVB) European Standard which specifies a format and content of such features. Another example is a standard called ATSC.

In DVB a part of the SI is comprised in a Network Information Table (NIT) and in a Service Description Table (SDT). The NIT contains a frequency plan of a given network, i.e. information on predetermined frequencies at which the digital broadcast receiver must be tuned to receive each TS available from the provider. The SDT lists available services of one TS including an identification and a scanning of each service. There may be a SDT for each TS. Each TS may contain SDTs for services available in other TSs.

Referring to Figure 2, an initialization of a digital broadcaster receiver, e.g. a DVB standard receiver, is started 6 and a predetermined frequency BF of a TS is set in 7. The NIT and at least one SDT are read in 8 and are used in 9 to build a list 10 of available services. The NIT and SDT information allows to associate a predetermined frequency to each of the available services in list 10.

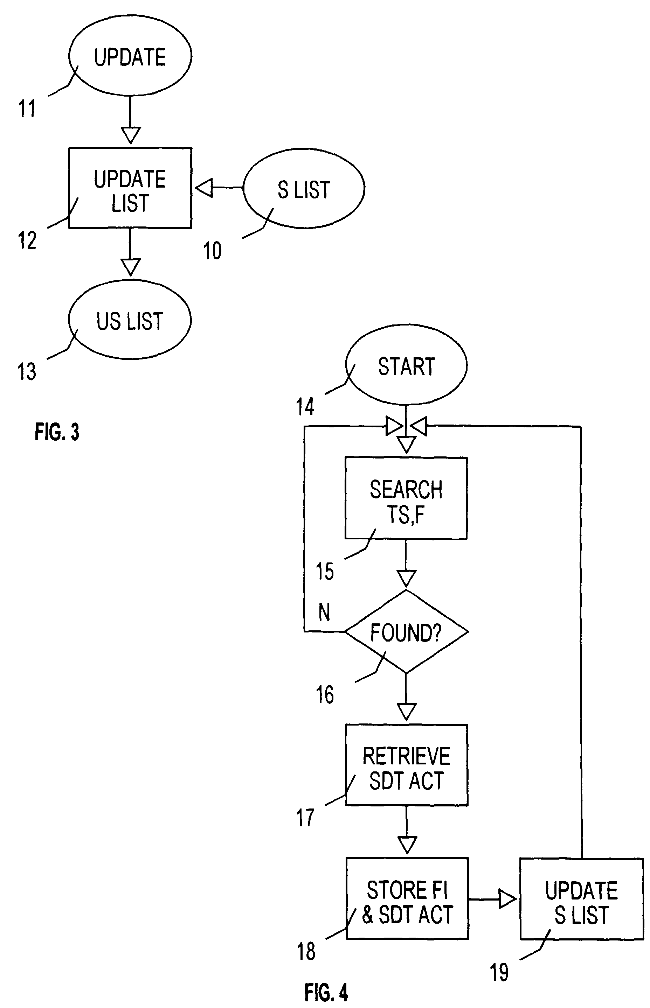

Referring to Figure 3 an update event 11 initiates the digital broadcast receiver to update in 12 the existing list 10 and obtain an updated list of available services 13. The update event may for example be a specific information broadcasted as part or not of the SI, and which indicates a change in a version number of the NIT and/or SDT. The NIT and/or SDT is/are read in the update 12 and the version number is set at a most actual value.

In DVB networks the TSs are broadcasted at the predetermined frequencies indicated in the NIT. In some networks it may happen for various reasons that TSs are broadcasted at frequencies which are not indicated in the SI. Therefore it is not possible to use standard DVB methods as depicted referring to Figures 2 and 3 to initialize a digital broadcast receiver in such networks. An example for the latter networks is a Satellite Master Antenna TV (SMATV) network. SI in the SMATV network may be the same as in a standard DVB.

Referring now to Figure 4 an initialization of a digital broadcast receiver in e.g. the SMATV network is started in 14. A frequency at which a TS is available is searched in 15. This may for example be done by scanning a frequency F. If such a frequency is found in 16 an actual SDT is read in 17 at that frequency and an associated frequency F1 is set equal to the tuned frequency F and stored in 18. A list of available services on the network is updated in 19 with information from the read actual SDT, each service from the actual SDT being associated to the associated frequency Fl. A new search in 15 is then started to find a further TS. If no TS is found in 16 (N) at the tuned frequency then the search 15 continues.

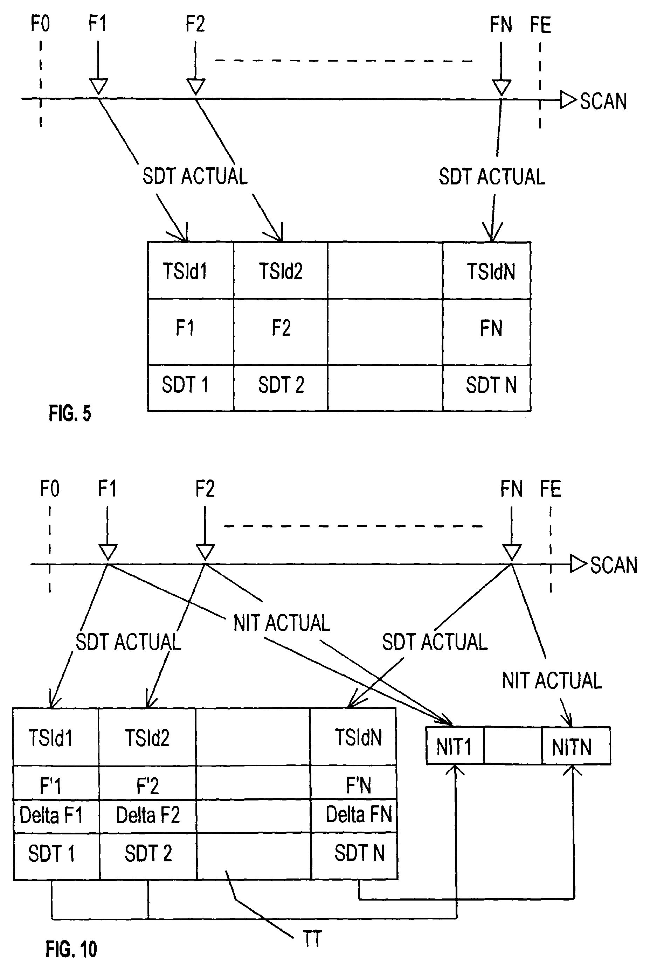

Referring now to Figure 5 a network topology may be constructed. The frequency is scanned from a start frequency FO to an end frequency FE. For every frequency F1, F2, ..., FN at which a TS is found, SI is read. More precisely the actual SDT is read at each frequency, and an identifying data (TSId1, TSId2, ..., TSIdN), a tuned frequency (F1, F2, ..., FN) and a list of available services (SDT1, SDT2, ..., SDTN) are stored in a table which makes up the network topology. The network topology may be used to look up tuning information for a selected service.

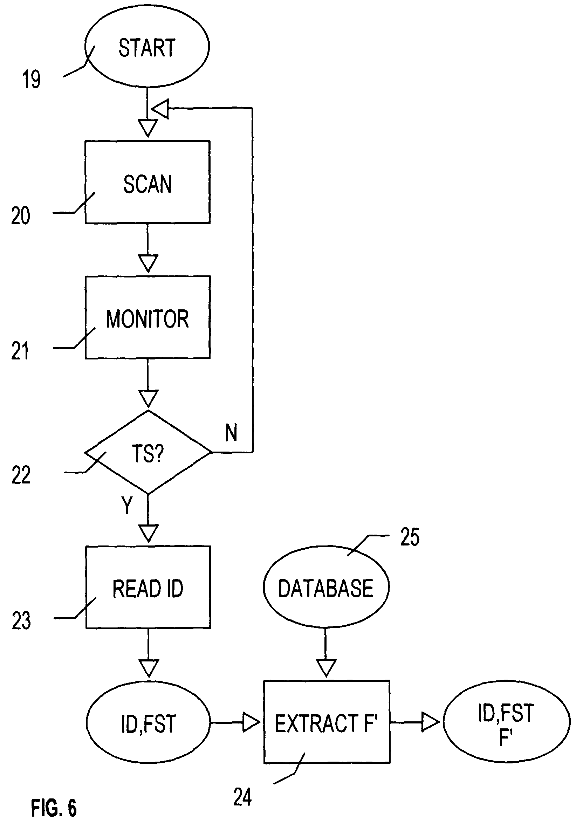

Referring to Figure 6 an initializing of a digital broadcast receiver is started in 19. A scanning 20 of a frequency in undertaken and a monitoring 21 checks for data possibly received at that frequency. If no data is received or if data received may not be recognized as providing from a TS, a case consideration 22 takes branch N and the scanning 20 followed by the monitoring 21 is again undertaken. If data is received and the received data is recognized as providing from a TS (branch Y) then a first frequency FST has been found at which a first transport stream is received. A reading 23 of first identifying data ID from the first TS allows a unique identification of the latter TS. An extracting 24 uses the first identifying data 10 to extract a predetermined frequency F' from a database 25. The database 25 contains information which directly or indirectly associates predetermined frequencies with predetermined identification data. The database 25 may for example be stored in a memory of the digital broadcast receiver or retrieved from a network.

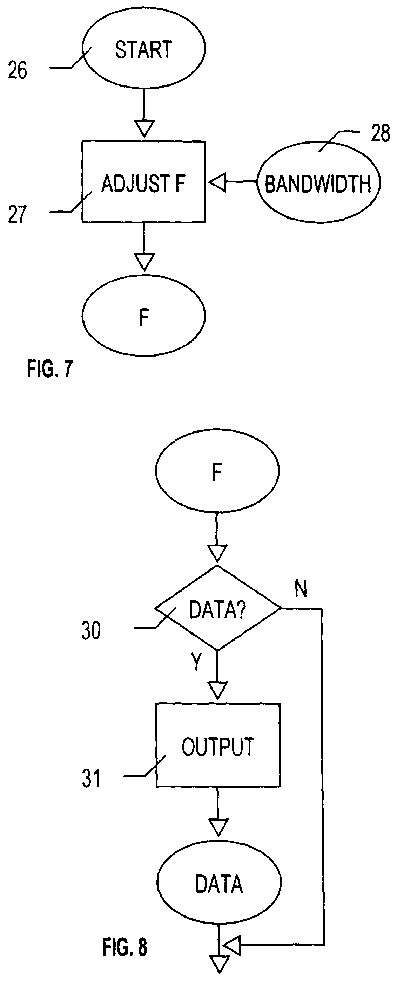

Referring to Figure 7 a flowchart illustrates an example to realize the scanning 20. After a start event 26 the frequency F is adjusted in 27, the frequency F being comprised in a scanning frequency bandwidth.

Referring to Figure 8 a flowchart illustrates an example to realize the monitoring 21. Once the frequency F is tuned a case check 30 determines if a signal received corresponds to received data. If yes (branch Y) the received data is outputted in 31 to be checked in 22 (see Figure 6). If no the output step 31 is bypassed.

In networks where TSs are broadcasted at frequencies different from predetermined frequencies expected for these TSs, the method illustrated in Figure 6 may be used to establish an association between the predetermined frequencies and actual different frequencies. Any known application in a digital broadcast receiver which requires to use the predetermined frequency F', e.g. an application which instructs the digital broadcast receiver to tune to the predetermined frequency F' to receive a determined service, may find the actual frequency FST using the existing association between F' and FST.

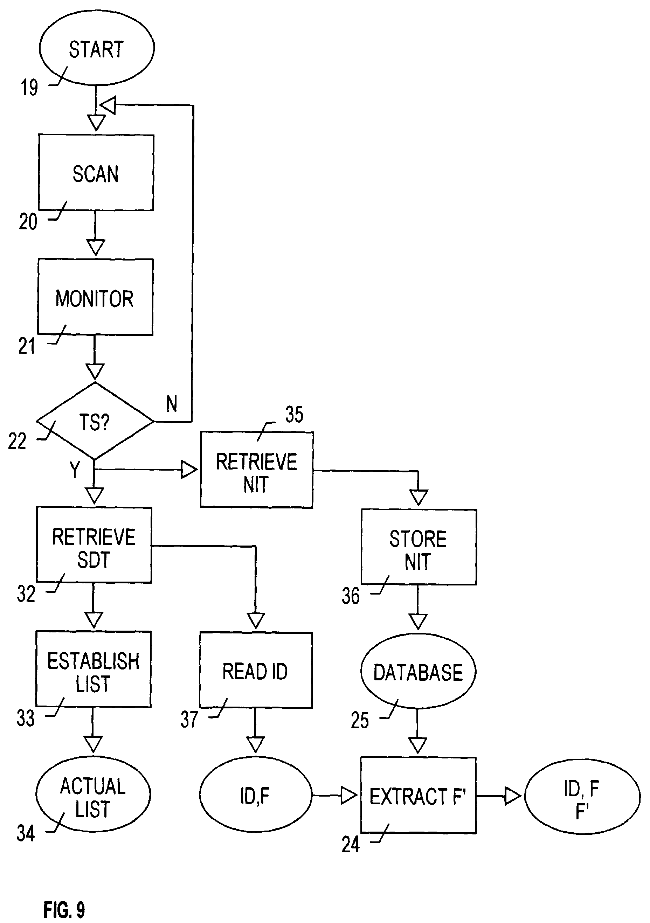

Referring to Figure 9 and in a similar way as depicted for Figure 6 an initializing of a digital broadcast receiver is started in 19. The scanning 20 and the monitoring 21 are undertaken. If the case consideration 22 determines that no data is received or that data received does not provide from a TS then branch N leads to the scanning 20. If data from a TS is received 14 (branch Y) a retrieving 32 of a SDT from the TS is realized and the SI from the SDT used to establish in 33 an actual list of services 34, which may be stored for example in a list memory (not shown) of the digital broadcast receiver. Following the mentioned branch Y after case consideration 22 a retrieving 35 of a NIT from the TS is realized and the NIT stored in step 36. The NIT information may be stored such that a database 25 is obtained which associates predetermined frequencies with predetermined identification data, i.e. with predetermined TSs.

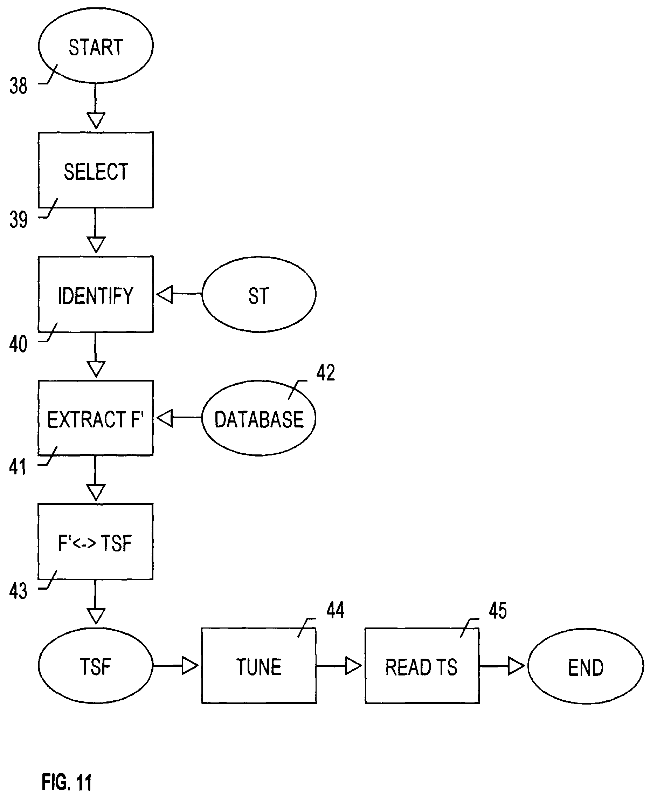

Following the SDT retrieving 32, a reading 37 of identifying data ID from the retrieved SDT allows a unique identification of the TS at the tuned frequency F. The extracting 24 uses the identifying data ID to extract a predetermined frequency F' from the database 25. This way the frequency at which the TS is broadcasted may be associated to the predetermined frequency of the TS as contained in the NIT. A topology table as shown in Figure 10 may be constructed. For every frequency F1, F2, ..., FN comprised between the start frequency F0 and the end frequency FE, a TS is found and SI is read. More precisely, the actual SDT is read at each tuned frequency (F1, F2, ..., FN) including identifying data (TSId1, TSId2, ..., TSIdN), and lists of available services (SDT1, SDT2, ..., SDTN) but also one or a plurality of actual NITs (NIT1, ..., NITN) are read. The identifying data (TSId1, TSId2, ..., TSIdN) is used to extract from the actual NITs (NIT1, ..., NITN) the associated predetermined frequencies F'1, F'2, ..., F'N. Finally frequency shifts $\Delta$F1, $\Delta$F2, ..., $\Delta$FN are calculated by respectively subtracting the tuned frequencies from the predetermined frequencies:

$$\Delta F1 = F'1 - F1$$

$$\Delta F2 = F'2 - F2 ...$$

$$\Delta FN = F'N - FN$$

This way it is always possible to tune to a TS when knowing its predetermined frequency from the NIT, i.e. one calculates the frequency of the TS's by subtracting a frequency shift from the predetermined frequency :

$$F1 = F'1 - \Delta F1$$

$$F2 = F'2 - \Delta F2 ...$$

$$FN = F'N - \Delta FN$$

Referring now to Figure 11 a start event 38, e.g. a push on a selection button by the user, initiates a selecting 39 of a service. This is what may happen when a user sees a list of available services and selects a service using a user interface. An identifying 40 of a TS in which the selected service is available is realized. The identifying 40 may use information contained in the list of available services ST, the information not necessarily being shown to the user. Once the TS has been identified an extracting 41 uses the TS information to look up a database 42 for an associated predetermined frequency. The database 42 may for example he based on the table shown in Figure 10 in which each row contains an identification of a TS and its predetermined frequency.

A computing 43 determines at which frequency TSF the TS may be received. The computing 43 uses the predetermined frequency extracted from the database 42. There may be several ways for computing the frequency TSF. One way may for example be to use the table shown in Figure 10, extract a frequency shift $\Delta$TSF and calculate the frequency TSF by subtracting the frequency shift $\Delta$TSF from the predetermined frequency. Another way would be to look up a correspondence database using the predetermined frequency. The correspondence database comprises information associating predetermined frequencies of TSs with actual frequencies at which the TSs may be received.

In a tuning 44 the digital broadcast receiver tunes to the frequency TSF at which the TS is received 45 and the selected service may be read.

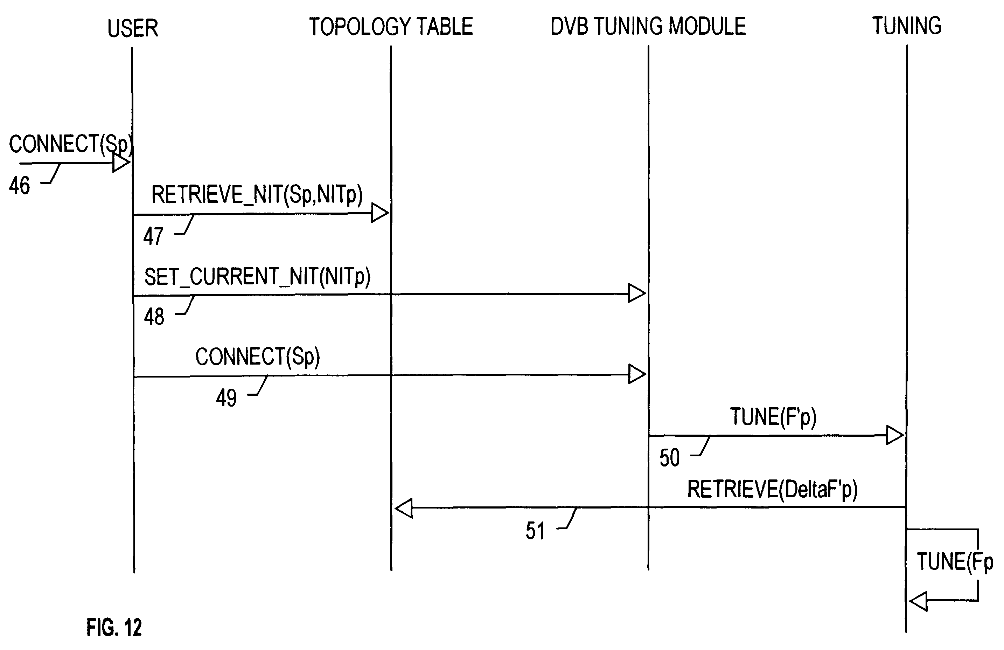

An illustration of a tuning mechanism in Figure 12 shows an example of how modules for tuning in DVB may be used in a network where TS are received at frequencies different from predetermined frequencies listed in the NIT. A user wants to select a service Sp in 46. In 47 NIT service information for Sp in retrieved from a specific NITp, the service information being stored in a topology table. The NITp service information is then in 48 submitted to the DVB tuning module together with an instruction 49 to select and tune to the service Sp. The DVB tuning module instructs in 50 the tuner of the digital broadcast receiver to tune to the predetermined frequency F'p at which the service Sp is available according to NITp and the tuner extracts in 51 information from the topology table in order to find and actual frequency Fp at which the service Sp is really broadcasted.

Finally the tuner tunes to the actual frequency Fp.

This way tuning modules originally designed for standard DVB networks may be reused in SMATV, thus saving development cost for new SMATV specific module.

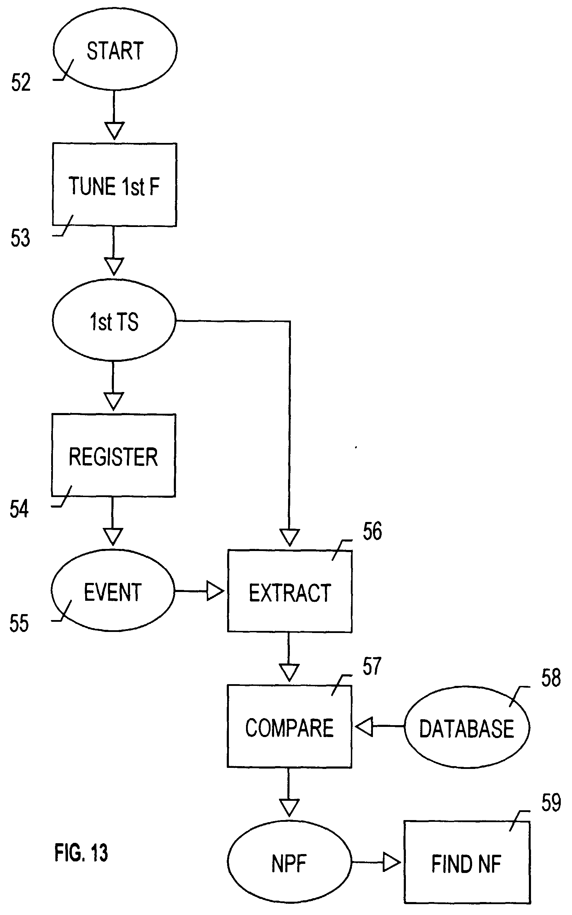

Referring now to Figure 13 a start 52 causes a tuning 53 of the digital broadcast receiver at the first frequency at which the first TS is received. This is what may happen when a user is tuned to receive a service from the first TS. In a registering 54 an update event 55 in noticed in the digital broadcast receiver. The event 55 may for example be broadcasted as SI at the first frequency. As a consequence new SI is extracted in 56 from the first TS. The new SI may for example be a new NIT or a new SDT. The new SI is compared in 57 with SI stored in a database 58. More precisely the comparison reveals if the new SI comprises a new predetermined frequency NPF associated to a new transport stream, not previously stored in the database 58. A finding step 59 initiates a finding of a new frequency NF corresponding to the new predetermined frequency NPF. The new TS will be received at the new frequency NF.

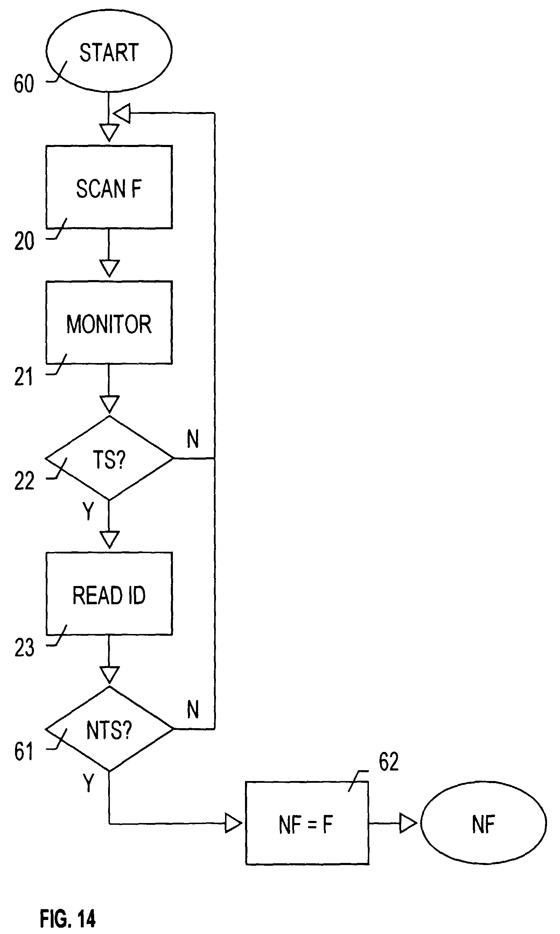

Referring to Figure 14 a start 60 initiates a way of finding the new frequency NF. The scanning 20 of a frequency is undertaken while the monitoring 21 checks for data possibility received at that frequency. If the check 22 reveals that no data is received or data received is not from a TS, the scanning 20 goes on (branch N). If the check 22 reveals that data is received from a TS (branch Y) the reading 23 allows to gain identification data which allows to uniquely identify the TS. A check 61 checks if the identification data identifies the new TS. If this is not the case (branch N) the scanning 20 is started again. If the new TS NTS is identified the value of the new frequency is set to the actual tuned frequency at which the new TS is received. This way the new frequency NF of the new TS has been determined.

Optionally the database 58 from Figure 13 may be updated with the new predetermined frequency NPF and information allowing to associate the new frequency NF to it.

**Claims**

1.  A Method for determining a predetermined frequency associated with a transport stream in a digital broadcast receiver, comprising :

    •   scanning (20, 21 ; 26, 27, 28 ; 30, 31) a frequency range,

    •   finding (22) a first frequency (FST) at which a first transport stream is received,

    •   reading (23) first identifying data (ID) from the first transport stream, which allows to uniquely identify the first transport stream,

    •   extracting (24) a first predetermined frequency (F') associated with the first identifying data from a database (25) by using the first identifying data, the data base associating a predetermined frequency with predetermined identification data.

2.  A method for determining a predetermined frequency according to claim 1, characterized in that it comprises :

    •   retrieving (32) a service description table (SDT) containing a list of available services, from the first transport stream,
    •   establishing (33) an actual list of services,
    •   storing the actual list of services.

3.  A method for determining a predetermined frequency according to claim 1, characterized in that it comprises :

    •   retrieving (35) a network information table (NIT) which comprises at least the database, from the first transport stream,
    •   storing the network information table.

4.  A method for determining a predetermined frequency according to claim 1, characterized in that it comprises :

    •   storing the first frequency for the first transport stream.

5.  A method for determining a predetermined frequency according to claim 1, characterized in that it comprises :

- computing a first frequency shift by subtracting the first predetermined frequency from the first frequency,
- storing the first frequency shift for the first transport stream.

6. A method for selecting a service using a digital broadcast receiver, the service being one of a plurality of services available from at least a first transport stream received at a first frequency comprising :

- selecting (39) the service,
- identifying (40) the first transport stream in which the service is available,
- extracting (41) a first predetermined frequency (F') associated with the first transport stream from a database (42), the database associating a predetermined frequency to a predetermined transport stream,
- computing (43) the first frequency (TSF) from the first determined frequency,
- tuning (44) the digital broadcast receiver to the first frequency, to receive the first transport stream,
- reading (45) the service from the first transport stream.

7. A method for selecting a service according to claim 6, characterized in that it comprises ;

- looking up a conversion table for the first predetermined frequency, the conversion table comprising for a predetermined frequency an associated frequency, and
- extracting from the conversion table the first frequency.

8. A method for selecting a service according to claim 6, characterized in that it comprises :

- looking up a frequency shift table for the first predetermined frequency, the frequency shift table comprising for a determined frequency an associated frequency shift, and
- extracting from the frequency shift table a first frequency shift which is a difference value between the first predetermined frequency and the first frequency.

9. A method for finding a new frequency of a new transport stream using a digital broadcast receiver, comprising :

- receiving (53) a first transport stream (1st TS) at the first frequency (1st F),
- registering (54) an update event (55),
- extracting (56) new information from the first transport stream, the new information associating predetermined frequencies with predetermined transport streams,
- comparing (57) the new information with a database (58) associating predetermined frequencies with predetermined transport streams,
- determining in the new information a new predetermined frequency (NPF) associated to the new transport streams which is different from the predetermined frequencies in the database,
- initiating (59) an update turning to find the new frequency (NF) a which the new transport stream may be received.

10. A method for finding a new frequency of a new transport stream according to claim 9, characterized in that it comprises :

- scanning (20, 21) a frequency range,
- finding (22) a used frequency at which a transport stream is received,
- reading (23) identifying data (ID) from the transport stream, which allows to uniquely identify the transport stream,
- setting (62) a value of the new frequency (NF) to a value of the frequency (F) if the identifying data identifies (61) the transport stream as the new transport stream (NTS).

11. A method for finding a new frequency of a new transport stream according to anyone of claims 9 or 10, characterized in that it comprises :

- updating the database using the new information.

FIG. 1

FIG. 2

FIG. 3

FIG. 4

FIG. 5

FIG. 10

FIG. 6

26 — START

27 — ADJUST F ← BANDWIDTH — 28

F

**FIG. 7**

F

30 — DATA? — N

Y

31 — OUTPUT

DATA

**FIG. 8**

FIG. 9

FIG. 11

CONNECT(Sp)

46

RETRIEVE_NIT(Sp,NITp)

47

SET_CURRENT_NIT(NITp)

48

CONNECT(Sp)

49

TUNE(F'p)

50

RETRIEVE(DeltaF'p)

51

TUNE(Fp)

**FIG. 12**

EP 0 999 664 A1

FIG. 13

**FIG. 14**

**European Patent Office**

**EUROPEAN SEARCH REPORT**

Application Number

EP 98 40 2766

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 98 24200 A (SCIENTIFIC ATLANTA ;WASILEWSKI ANTHONY J (US)) 4 June 1998 * abstract * * page 8, line 13 - line 28 * | 6,7 | H04H1/00 H04N5/00 |
| A | * figure 1 * | 3 | |
| X | EP 0 834 991 A (IRDETO BV) 8 April 1998 | 1,3 | |
| A | * the whole document * | 10 | |

TECHNICAL FIELDS SEARCHED (Int.Cl.6)

H04H
H04N

The present search report has been drawn up for all claims

| Place of search | Date of completion of the search | Examiner |
|---|---|---|
| THE HAGUE | 23 April 1999 | Simon, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 98 40 2766

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-1999

| Patent document cited in search report | Publication date | Patent family member(s) | Publication date |
|---|---|---|---|
| WO 9824200 A | 04-06-1998 | AU 5507398 A | 22-06-1998 |
| EP 0834991 A | 08-04-1998 | NONE | |

EPO FORM P0459

For more details about this annex : see Official Journal of the European Patent Office, No. 12/82